# EUROPEAN PATENT SPECIFICATION

(11) **EP 3 175 217 B1**
(45) Date of publication and mention of the grant of the patent: **06.10.2021**
(21) Application number: 15767261.9
(22) Date of filing: 27.07.2015
(51) Int. Cl.: G01N 1/06, G01N 35/00

(54) **MICROTOME AND METHOD FOR ROUGHING AND SECTIONING SPECIMENS OF BIOLOGICAL MATERIAL**
MIKROTOM UND VERFAHREN ZUM GROBEN SEPARIEREN UND ZERTEILEN VON PROBEN AUS BIOLOGISCHEM MATERIAL
MICROTOME ET PROCÉDÉ DE DÉGROSSISSAGE DE SPÉCIMENS ET DE SECTIONNEMENT DE MATÉRIAU BIOLOGIQUE

(30) Priority: 01.08.2014 IT MI20141422
(43) Date of publication of application: 07.06.2017
(73) Proprietor: Diapath S.p.A., 24057 Martinengo (BG) (IT)
(72) Inventor: LIMONTA, Enzo, I-24057 Martinengo (BG) (IT); MANENTI, Giorgio, I-24057 Martinengo (BG) (IT); FAVARO, Mirko, I-24057 Martinengo (BG) (IT); VISENTINI, Alessandro, I-24057 Martinengo (BG) (IT); BERGAMINI, Vladimiro, I-24057 Martinengo (BG) (IT)
(74) Representative: Trupiano, Federica
(86) International application number: PCT/IB2015/055673
(87) International publication number: WO 2016/016795

(56) References cited:
- EP-A1- 1 985 984
- US-A1- 2005 235 542
- US-A1- 2010 101 385
- None

## Description

### Field of the Invention

The present invention concerns a microtome and, preferably, a microtome for the sectioning of specimens of biological material, for example in cyto-histopathology laboratories, in hospitals, etc. The invention also concerns a method for roughing and sectioning specimens of biological material.

### Known Prior Art

Often, for observing a specimen of biological material (e.g., plant or animal tissue) with the light microscope it is necessary to carry out a series of procedures that render a specimen sufficiently thin to be crossed by the light positioned under the ocular apparatus of the microscope.

As it is known, the biological material, such for example specimen of tissue from biopsies or from surgery, are appropriately treated and placed and kept in cassettes. The specimen is sectioned by using special equipments, the microtomes, by which it is possible to section the specimen with thicknesses of a few micron.

The microtome can be a rotatory microtome, provided with a sledge or linear bearings, manual or motorized, and is adapted for sectioning specimen previously treated by means of some processes known in the art. With particular reference to specimens of biological material, following a withdrawal, the specimen is treated by typically carrying out the steps of fixation, dehydration, clarification and embedding for ensuring an appropriate sectioning and a correct observation with the light microscope. In particular, the embedding is the procedure that renders the specimen of biological material, for example a tissue, more compact to allow the cutting for obtaining sections with appropriate thickness for the types of observation (and thus for the type of microscope) they will be subjected to: 2-3 µm, in case of light microscopy.

The most used material for the embedding of the specimen in optical microscopy is paraffin. Each specimen is thus submerged in a shaped container, in which liquid paraffin is poured, this is left solidifying at ambient temperature forming a block of embedded material. The solid block is then removed from the container and fastened in a support structure called "cassette" (generally, in plastic material), ready for the successive sectioning step.

As it is known, the standard type cassettes have a substantially parallelepiped form in which it is possible to identify two major opposed surfaces, and four side surfaces having a lesser extent with respect to the major ones. As it is known, one of the side surfaces of the cassette is tilted.

With respect to the sectioning device, the most common microtome is the rotary microtome, in which a pivoting arm is present provided with a cassette-holder device (typically, a clamp) on which the paraffin block containing the tissue (specimen of biological material) is fastened. The block, at each pivoting, glides against a very sharp blade, disposed in a blade-holder device with an angle adapted for the sectioning of the block, without compressing it excessively.

The swinging movement of the microtome arm is generally manually actuated with a crank and it is its regular movement that causes the slow approaching of the block to the blade. During each passage, the block gets nearer to the blade, by means of a micrometer mechanism, by a distance equal to the desired thickness of the section. The advancing mechanism can be set by means of a grip, or an user interface, on predetermined thicknesses.

It should be noted that, during the embedding, the specimen of biological material is placed and submerged in paraffin at a predetermined orientation, such that once the cassette is placed in the cassette-holder device, the sectioning is carried out in a particular cutting direction that depends on the type of specimen to be sectioned. Furthermore, after the embedding step, the specimen of biological material is covered with a paraffin layer, that must be removed in order to expose the specimen for the sectioning. In other words, for sectioning the specimen included in the paraffin block, the so-called "roughing" of the block must be carried out, preparing it for the sectioning.

Usually, during the roughing procedure, the paraffin layer that covers the specimen is removed by sectioning the block with the microtome. This step requires special attention, in that it is easy to waste tissue important for the diagnosis or to damage the block surfaces.

Once the block has been roughed, the specimen of biological material can be sectioned, forming for example characteristic section "strips". Indeed, each successive section sliding on the blade edge, pushes the previous section away and, due to the mild warming up caused by the friction on the blade, the two section adhere to each other. In order to obtain a representative section of the specimen, preserving its morphological features, one should consider some cutting parameters, such for example, the thickness with which the specimen is sectioned, the cutting speed with which the specimen is sectioned, the orientation of the specimen of biological material with respect to the blade. Furthermore, depending on the type of blade, one should take into account the tilting of the blade with respect to the cassette-holder device.

Some microtomes further have the capacity of retracting the blade. Such microtomes are designed for pushing away the specimen with a predetermined distance (retraction distance) of the blade, avoiding rubbing of the blade with the specimen during the lifting stroke and accumulating residues on the back of the blade.

A further cutting parameter that can be set on some microtomes is the so-called "cut window". In particular, some microtomes, during the stroke of the pivoting arm, use a particular cutting speed for the portion of its stroke coinciding with the paraffin block and a second cutting speed (typically superior with respect to the preceding one) for the remaining stroke portion. The length of the stroke portion intended for the cutting of the block is said cut window.

This parameter must be carefully selected by a skilled operator and manually adjusted on the microtome for carrying out the sectioning of a plurality of specimens embedded in respective blocks, housed in as many cassettes.

In particular, the roughing step, as previously said, is a step in which the operator must have much attention for not wasting specimen sections worthlessly.

Furthermore, the roughing procedure is usually carried out on a plurality of cassettes that are successively submitted to the sectioning procedure.

Indeed, especially in laboratories in which it is necessary to operate on a high number of cassettes, they are firstly roughed and only successively, they are submitted to the sectioning procedure. It is not uncommon that the roughing and sectioning procedures are carried out by two distinct operators.

Carrying out such operations requires much time, especially because the operator must mount the previously roughed cassette again and adjust the cutting parameters again during the sectioning procedure.

For example, when it is desired to carry out the sectioning of an already roughed block, the operator should take into account, for example, the cutting parameter constituted by the distance between the blade-holder device and the cassette-holder device. In other words, the operator will gradually reduce the distance between the blade-holder device and the cassette-holder device until reaching a position adapted for the sectioning, in which it is possible to obtain specimen sections with desired related cutting parameters.

The operator responsible for the sectioning will therefore adjust the cutting parameters again when a cassette on which a roughing procedure has been previously carried out is placed in the microtome for the sectioning of the specimen.

The presence of a plurality of cutting parameters depending on the type of specimen, often causes a slowing down of the operations and/or renders it necessary to carry out all this operations directly involving a series of operators, raising consequently the costs and increasing the possibility of human errors.

Microtomes that enable the detection of the type of specimen of biological material contained in the cassette through the identification of a code provided on the cassette are known in the art. In this way, according to the type of specimen of biological material, some cutting parameters can be used in the sectioning procedure. Microtomes of this type are described, for example, in the documents US2010/0101385 e US2005/0235542 in which the type of specimen of biological material (for example, depending on the source organ), is recognized by reading an identification code associated to the cassette and is used for optimizing the microtome for the cutting.

However, in such microtomes, the information used depends on the type of specimen of biological material, and equal information will be associated to specimens of the same type. For this reason, the information associated with the type of specimen of biological material is not useful for the optimization and the procedure for preparing the samples, in which a first roughing step is carried out, before the specimen section is carried out. Furthermore, the problems reported with the use of the microtomes described in the documents US2010/0101385 e US2005/0235542 are emphasized in case one should operate on an elevated number of cassettes and in which specimen of biological material of the same type require the sectioning according to different parameters, even if the specimen of material is of the same type.

It is thus clear that the optimization, in terms of time and costs, of the above described procedure for the preparation of specimen for the histological analysis, represents an important advantage, as well as a goal to be achieved.

Object of the present invention is to overtake the problems of the prior art briefly discussed above and to provide a microtome that renders the operations to be carried out for the sectioning of a specimen of biological material easier and quicker.

Further object of the invention is to provide a microtome that can minimize the error possibilities by an operator that carries out the sectioning of a specimen of biological material.

Further object of the invention is to provide a method for roughing and sectioning a specimen by means of a microtome, capable of optimizing the time necessary to carry out the sectioning of various specimen of biological material, of reducing the labor costs with respect to the known prior art and that is capable of automating the adjusting steps of the cutting parameters for the sectioning of different specimen.

### Summary of the Invention

This and further objects are obtained by the present invention by means of a microtome and a method for roughing and sectioning of specimens, according to the independent claims 1 and 10.

According to the present invention, the microtome comprises a blade-holder device on which at least one cutting blade is supported, a cassette-holder device for supporting a cassette containing a block for the embedding of a specimen of biological material. The microtome further comprises means for adjusting at least one cutting parameter and means for acquiring an identification code associated with the cassette. Indeed, in the present invention, an identification code is associated with each cassette and that at least one value of at least one cutting parameter, adapted for the sectioning of the specimen contained in the cassette, is associated to the identification code. According to an aspect of the present invention, the identification code is arranged on at least one portion of the cassette.

Means for acquiring the identification code automatically detect and acquire the identification code avoiding possible reading errors of the identification code by the operator.

According to an advantageous aspect of the present invention, at least one value of at least one cutting parameter adapted for the sectioning of the specimen of biological material, is associated with the identification code during the roughing procedure, or during a first sectioning procedure. According to an aspect of the present invention, the at least one value of at least on cutting parameter adapted for the sectioning of the specimen of biological material, attained at the end of the roughing procedure or at the end of the first sectioning procedure, with the identification code C, is used later in a successive sectioning procedure of a plurality of sections of the specimen of biological material of the same cassette.

In more detail, the microtome according to the present invention, is configured such that the at least one value of at least on cutting parameter adapted for the sectioning of the specimen of biological material is associated with the identification code in the roughing procedure of the specimen, or in a first sectioning procedure, and is used successively in a successive sectioning procedure of a plurality of sections of the specimen of biological material of the same cassette.

Thus, in addition to avoiding possible set up errors of the cutting parameters during the successive sectioning procedure, advantageously, at least one value of one or more cutting parameters that has been attained at the end of the roughing procedure or of the first sectioning procedure can be quickly used again (set again), for example during the successive sectioning procedure in an automated, definite and quick way.

Indeed, means for acquire the identification code associated with the cassette in the successive sectioning procedure when the cassette previously submitted to the roughing procedure of the specimen, or to a first sectioning procedure, is fastened again to the cassette-holder device, acquire the identification code and therefore the value of at least one cutting parameter previously associated with the identification code during the roughing step, or the first sectioning step.

Means for adjusting at least one cutting parameter of the microtome according to the invention are operated for setting the value associated to the identification code, such that they can be used again (set again) during the successive sectioning procedure.

Advantageously, differently to what occurs with the microtomes known in the art, at least one value of one cutting parameter is run independently from the other cassettes and independently from the type of specimen of biological material. In particular, at least one value of the cutting parameter used for a single cassette at the end of the roughing procedure or of a first sectioning step, is associated to the code of the cassette for being later used again (set again), when the cassette will be successively inserted again in the microtome for performing a successive sectioning procedure.

According to an aspect of the present invention, the at least one value of at least one cutting parameter adapted for the sectioning of the specimen of biological material, associated to the identification code, can be determined depending on the value on which the adjusting means of the cutting parameters are set, preferably during the roughing procedure, or during a first sectioning procedure.

In this way, the value of a cutting parameter that has been set and/or input and/or selected preferably by an operator, for example during the roughing procedure, and that is considered adapted for the sectioning of the specimen during the successive cutting procedure, can be advantageously associated to the identification code of the cassette. Thus, when the sectioning procedure will be carried out, the identification code could be advantageously acquired and the at least one value of at least one cutting parameter associated to it could be used again. According to an aspect of the present invention, the means for acquiring the identification code comprise a bar code reader and/or a two dimensional code reader and/or a RFID code reader and/or a magnetic code reader. According to an aspect, said means for acquiring the identification code are outside the microtome and/or placed on it.

Indeed, after having acquired the identification code, in case it will be necessary to section the specimen, whose cutting parameters have been previously set and associated (stored in) to the identification code, all the cutting parameters adapted for the sectioning for that particular specimen of biological material will be available for the operator, without having to obtain them again, or decide them from time to time. Usually, the set value of the adjusting means is chosen by an operator, preferably by the operator who carries out the roughing of the specimen, or a first sectioning procedure. Such value can be associated to the identification code of the cassette. Thus, the value set by the adjusting means, which is according to the invention, the distance between the cassette-holder device and the blade-holder device could be associated to the identification code of the cassette and easily used, during the successive sectioning procedure.

It should be noted that the successive sectioning procedure can be carried out even a long time after the roughing procedure, or after the first sectioning procedure. In any case, when the cassette will be inserted again in the microtome, the reading of the identification code will allow to use again (set again) the cutting parameters adapted for the sectioning associated to that specific cassette in the previous roughing procedure or in the first sectioning procedure. As previously said, it should be noted that, even if in the following direct reference will be made to the association of at least one value of at least one cutting parameter to the identification code during the roughing procedure, such association can be carried out also in a first sectioning procedure. Indeed, the at least one value of at least on cutting parameter adapted for the sectioning associated to the identification code during the roughing procedure, or during a first sectioning procedure, can be advantageously used again in a successive sectioning procedure.

Advantageously, during the roughing procedure, the cassette holder device, and thus the block in which the specimen of biological material is embedded, is placed in a position (distance) with respect to the blade-holder device, and thus with respect to the blade, adapted for the sectioning.

Such distance, i.e. the value of the cutting parameter used at the end of the roughing procedure, is advantageously associated to the identification code of the cassette, for being then easily and quickly identified and used again, to place again the blade holder and the cassette holder in the same position, when the sectioning procedure of the specimen will be carried out.

More in detail, during the roughing procedure, at least one section of the block is cut, such as to make the specimen of biological material contained in it accessible for the sectioning. The position reached at the end of the roughing, preferably in terms of position with respect to the cassette-holder device and the blade-holder device, represents the value of such cutting parameter (distance between the cassette-holder and the blade-holder) adapted for the sectioning.

In some embodiments, in addition to the distance between the cassette-holder and the blade-holder there are other values of the set cutting parameters, preferably during the roughing step and, more preferably at the end of the roughing step when the specimen is adapted for the sectioning, or during and/or at the end of a first sectioning procedure, that can be advantageously associated to the identification code of the cassette, in order to be used successively, for positioning the cutting parameters of the microtome again on such values during a successive sectioning procedure.

Advantageously, the at least one cutting parameter adapted for the sectioning of said specimen of biological material is the distance between the blade-holder device and the cassette-holder device, in some embodiment additional parameters can be employed namely the tilt of the blade with respect to said cassette-holder device, the cutting speed with which said specimen is sectioned, the thickness with which the section of said specimen is made, the orientation of said specimen of biological material with respect to the blade, the retraction distance, the size of the cut window, or a combination of one or more of the preceding cutting parameters.

Obviously, other cutting parameters, not indicated here, can be used in the microtome and in the method of the present invention.

Furthermore, according to a further aspect of the present invention, the at least one value of at least one cutting parameter adapted for the sectioning of the specimen of biological material is input and/or selected among a plurality of values, preferably by an operator, depending on the identification code of the cassette.

In other words, based on the information contained in the identification code, such as for example the type of tissue contained in it, the type of examination that should be done on the specimen, the operator can input, or select among, a plurality of predetermined values, for example by means of an user interface, one or more values of one or more cutting parameters adapted for the sectioning, associated to the identification code during the roughing procedure or in a first sectioning procedure and that can be successively used, preferably during a successive sectioning procedure. Advantageously, after having acquired the identification code associated with the cassette, the operator can insert one or more cutting parameters that are associated to the identification code inside the database from the microtome itself or from an interface (comprising, for example, a display, a keyboard, PC) connected to the microtome.

As mentioned, the microtome according to the invention comprises means for associating at least one value of at least one cutting parameter adapted for the sectioning to the identification code of the cassette.

According to a possible embodiment, such means for associating at least one value of at least on cutting parameter adapted for the sectioning of the specimen comprise a memory, that can be inside and/or outside of the microtome. Inside the memory a database, in which it is possible to associate to each identification code one or more value of one or more cutting parameters adapted for the sectioning, is present. According to a possible embodiment, the memory can consist of a portion of the identification code of the cassette, or of at least one portion of a further identification code the cassette can be provided with.

Advantageously, in case of an outer memory, the memory can be remotely accessible in order to access the database, i.e. the data map associates to a determined identification code of a cassette at least one value of at least one cutting parameter adapted for the sectioning of the specimen contained in the cassette, for example from a plurality of microtomes or from more management devices of the cassettes. Indeed, the microtome according to the present invention can be integrated in a management device of cassettes containing biological material, comprising, for example, two or more microtomes and, optionally a storage unit of the cassettes and other known devices.

The present invention also concerns a method according to claim 10 for the roughing and the sectioning of samples of biological material embedded in a block contained in a cassette by means of a microtome.

The method can be carried out with the microtome according to the invention described here.

The method comprises a roughing procedure, in which the specimen of biological material embedded in the block is prepared for the sectioning, or for a first sectioning procedure. According to a preferred embodiment, the method comprises a successive sectioning procedure, in which a plurality of sections of the specimen of biological material are cut.

According to an aspect of the invention, the method is characterized by carrying out the roughing procedure of the block on a plurality of cassettes, or carrying out a first sectioning procedure of a plurality of cassettes.

The roughing procedure, or a first sectioning procedure, comprises the step of fastening a cassette containing a block for the embedding of the specimen of biological material to a cassette-holder device of the microtome, the step of acquiring an identification code associated with the cassette, the step of determining at least one cutting parameter on at least one value adapted for the sectioning and the step of associating at least one value of at least one cutting parameter adapted for the sectioning of the specimen of biological material to the identification code of the cassette.

Such feature is particularly advantageous, for example, in case it should be necessary to carry out the roughing and sectioning of a high number of specimens having different cutting parameters. With the microtome according to the present invention it is advantageous, for example, to carry out the roughing procedure, or a first sectioning procedure, in a different moment with respect to a successive sectioning procedure. It is not necessary to carry out consecutively the roughing of the block and the sectioning for each specimen.

Indeed, it is more advantageous to carry out firstly the roughing of the blocks, or a first sectioning procedure, and successively, when required, it is possible to carry out a further sectioning of the specimen contained in each block. In particular, once the roughing, or a first sectioning procedure, has been carried out, the database will be updated, such that to each identification code of each cassette the cutting parameter is associated, which is the value of the distance between the blade-holder device and the cassette-holder device.

Indeed, according to the method of present invention, the at least one value of at least one cutting parameter adapted for the sectioning of the specimen of biological material associated to the identification code of the cassette during the roughing procedure, or during the first sectioning procedure, is used in a successive sectioning procedure of a plurality of sections of the specimen of biological material. Thus, when it will be required to carry out a successive sectioning of a specimen, the operator does not need to obtain the position adapted for the sectioning, by progressively reducing the distance between the blade-holder device and the cassette-holder device.

According to the invention, the position adapted for the sectioning, already obtained and stored previously, is automatically set again by the operator, in an easy and quick way. This feature allows to optimize both the management of the cassettes and the time necessary to carry out the sectioning of a high number of specimens, as it is frequently the case in hospitals or in specialized centers, in which the roughing step of the specimen is a critical step, that slows down the operations, especially when the sectioning step of each sample is not carried out immediately after the roughing step of each block, by removing the roughed cassette from the microtome, at the end of such procedure, in order to fasten the cassette again to the microtome, when it is desired to carry out the sectioning.

Generally, according to the present invention, at least one cutting parameter adapted for the sectioning is the value of the distance between the blade holder device and the cassette holder device used at the end of the roughing procedure, or at the end of a first sectioning procedure of said specimen of biological material.

In the method, according to an aspect of the present invention, the step of determining at least one cutting parameter on at least one value adapted for the sectioning comprises the step of input, or selecting among a plurality of values, preferably by an operator, at least one value adapted for the sectioning of at least one cutting parameter, preferably depending on the identification code.

According to the method according to the present invention, the successive sectioning procedure comprises the step of fastening a cassette (previously submitted to a roughing procedure, or to a first sectioning procedure and successively removed from the microtome) to the cassette-holder device; the step of acquiring the identification code of the cassette and the step of setting again the adjusting means of at least one cutting parameter depending on the at least one value adapted for the sectioning associated to the identification code during the roughing procedure, or during the first sectioning procedure.

A further advantage obtained by means of the microtome according to the present invention consists in reducing the possibility of making errors by the operator, especially during the step of adjusting the distance between the blade-holder device and the cassette-holder device for the sectioning of the already roughed block. In general, it is possible to reduce anyway the possibility to make errors by the operator also during the adjustment of all the cutting parameters associated with a particular specimen. Thus, it is possible to completely automatize the management and the sectioning of the specimens, thereby reducing the costs for the appointed personnel and optimizing the operation times.

### Brief description of the drawings

Further aspects and advantages of the present invention will result more clearly from the following description, uniquely provided by illustrative, non limiting, way with reference to the appended schematic drawings, in which:

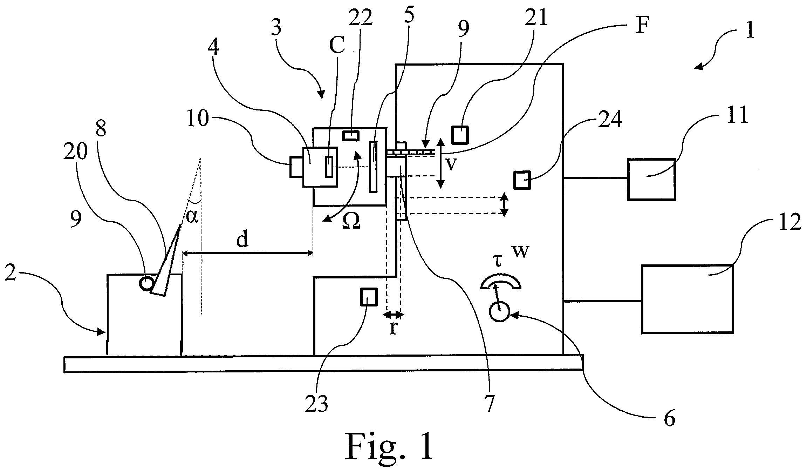

- Fig. 1 shows schematically an embodiment of the microtome according to the present invention.

### Mode for Carrying out the Invention

Figure 1 shows a microtome 1, comprising a blade-holder device 2, a cassette-holder device 3 for supporting a cassette 4 containing a block 10 for the embedding of a specimen of biological material.

In Fig. 1 a motorized rotary microtome 1 is shown schematically, i.e. a microtome in which the pivoting of the arm 7 is produced by an electric motor, differently from the manual microtome, in which the pivoting of the arm 7 is manually produced by the operator, by rotating a crank. Even if in the following description reference will be made to a rotary microtome, the most common type of microtome, the present invention can be anyway implemented also on other types of microtomes, such for example, provided with a sledge or linear bearings, manual or motorized.

The microtome 1 is characterized by comprising means 5 for acquiring an identification code C associated with said cassette 4 and in that at least one cutting parameter, adapted for the sectioning of the specimen of biological material, is associated to the identification code C.

Each cutting parameter can be adjusted thanks to appropriate adjusting means 6, 9, 20, 21, 22, 23, 24.

According to different possible embodiments, the at least one cutting parameter adapted for the sectioning of said specimen of biological material is the distance d between the blade-holder device 2 and the cassette-holder device 3, in some embodiment the following additional parameter are also employed: the tilt α of the blade 8 with respect to said cassette-holder device 3, the cutting speed v with which said specimen is sectioned, the thickness τ with which the section of said specimen is made, the orientation Ω of said specimen of biological material with respect to the blade 8, the retraction distance r, the size of the cut window w, or a combination of one or more of the preceding cutting parameters (d, α, τ, v, Ω, r, w).

Obviously, the microtome comprises appropriate means 6, 9, 20, 21, 22, 23, 24 for adjusting the above indicated cutting parameters.

Generally, means for adjusting the at least one cutting parameter (d, α, τ, v, Ω, r, w) comprise means 9 for moving said cassette-holder device 3 with respect to said blade-holder device 2, or vice versa, means 20 for moving said blade 8 with respect to said blade-holder device 2, means 21 for adjusting the movement speed of said cassette-holder device 3 with respect to said blade-holder device 2, means 6 for adjusting the advance of said cassette-holder device 3 with respect to said blade-holder device 2, means 22 for rotating and/or tilting said cassette 4 with respect to said blade 8, means 23 for adjusting the retraction distance, means 24 for adjusting the size of the cut window, or a combination of one or more of the preceding ones, depending on the adjustable cutting parameters of the microtome.

It should be noted that the adjusting means 6, 9, 20, 21, 22, 23, 24 are advantageously connected to a control unit (not shown) that can be internal with respect to the microtome, or external, for example belonging to a device to which the microtome is connected.

Advantageously, the adjusting means are such that they can indicate (detect) the value of the corresponding cutting parameter on which they are set. For example, the control unit can determine the value on which the adjusting means are set.

In some embodiments, in combination with the control unit, at least one sensor, or similar means (not shown, for simplicity of illustration), for determining the value on which the adjusting means for the cutting parameters are set, can be employed.

In any case, the microtome according to the invention can advantageously determine the value of the cutting parameter on which adjusting means are set for associating it to the identification code C of the cassette.

A possible embodiment of the adjusting means 6, 9, 20, 21, 22, 23, 24 of the cutting parameters for a correct sectioning of the specimen will be now described with reference to Fig. 1.

Nevertheless, as said above, according to different possible embodiments, the microtome can control one or more cutting parameters and thus being provided with respective adjusting means.

In particular, d indicates the distance between the blade-holder device 2 and the cassette-holder device 3. For adjusting the cutting parameter d, the microtome is preferably provided with appropriate means, comprising, for example, a sliding guide 9, or similar means, on which the cassette-holder device 3 can be moved. Consequently, the cassette-holder device 3 can be moved closer to and/or away from the blade-holder device 2, that can be fixed, or also movable. Moving the cassette-holder device 3 with respect to the blade-holder device is preferably realized by means of a motor (not shown), for example a stepper one. Preferably, for obtaining more reliability, the use of distance sensors is envisaged for determining and/or adjusting the cutting parameter d, with a feedback control.

α indicates the tilt angle of the blade 8 with respect to the cassette holder device 3. Such parameter can be adjusted by appropriate means 20, comprising, for example, a grip for the manual operation. According to a possible embodiment, means 20 can allow the automated adjusting of the tilt angle α of the blade 8, for example, by means of a further motor agent for rotating the blade 8 and bring it in a determined tilt.

Indeed, the blade 8 is preferably secured to the blade holder device for being rotated preferably around at least one rotation axis. Also in this case, the use of an encoder, or similar sensor, can be envisaged for determining and/or regulating the cutting parameter α, with a feedback control.

τ indicates the thickness with which the section of the specimen is made, such parameter being adjusted acting on the micrometer mechanism (not shown), such that at each pivoting of the arm 7, the distance d between the blade-holder device and the cassette-holder device is reduced by an amount corresponding to thickness τ.

Such micrometer mechanism can be achieved for example by means of an advancing micrometer screw actuated by an electric motor, preferably the same used for adjusting the cutting parameter d.

The adjusting means 6 of the cutting parameter τ comprise for example a micrometer mechanism and a grip 6 (see Fig. 1) for adjusting the thickness τ that can be obtained by means of the micrometer mechanism, and in particular the micrometer screw. Nevertheless, according to further possible embodiments, the adjusting means 6 can also comprise the use of an interface 12, through which it is possible to display and/or adjust the thickness τ automatically.

v indicates the speed with which the sectioning is made, that is the speed with which the pivoting arm 7 is lifted or lowered, preferably in the direction indicated by the arrow F. Means 21 for modifying the sectioning speed v, schematically depicted in Fig. 1, can have different arrangements. In manual microtomes, the pivoting of the arm 7 is produced by a crank operated by the operator and therefore the speed v is directly regulated by the operator according to its experience, or by means of an appropriate mechanism that modifies the pivoting speed of the arm 7. According to further possible embodiments, as schematically depicted for example in Fig. 1, the microtome 1 envisages the use of means 21 for moving the pivoting arm (for example, an electric motor), with which it is possible to adjust the rotation speed of the motor and consequently the sectioning speed v. According to a possible embodiment, by means of the interface 12 it is therefore possible to display and/or adjust the sectioning speed v.

A further cutting parameter, schematically indicated in Fig. 1, is the orientation Ω of the specimen with respect to the blade 8, that is the orientation with which the cassette 4 is fastened to the cassette-holder device 3. Such parameter is useful for obtaining the sectioning of the specimen in a determined cutting direction.

Means 22 for rotating and/or tilting the cassette-holder device 3 and therefore the cassette 4 with respect to the blade 8, can be envisaged, for example one or more bearings for rotating and/or tilting the cassette-holder device and /or actuation means, for example in form of actuators or motors, provided to determine the translation and/or rotation of the cassette 4 with respect to the blade 2, or vice versa.

In Fig. 1, r indicates schematically the retraction distance, that is how much the specimen can be moved away from the blade during the lifting step of the pivoting arm 7 and w indicates the cut window, that is the size of the portion of the stroke of the arm 7, involved in the sectioning of the block 10.

Similarly to the adjusting mechanism of the cutting thickness τ, adjusting means 23 of the retraction distance r can comprise a micrometer mechanism (for example, comprising a stepper motor and a micrometer screw) and a grip (or an appropriate user interface) in order to display and/or adjust the distance r automatically. Preferably, the micrometer mechanism for adjusting the parameter r is the same used for adjusting the parameter τ.

Appropriate adjusting means 24, suitable for example for modifying the pivoting speed of the arm 7, or the moving speed in a determined extent of the cut window, can be envisaged. For example, it is possible to modify the feeding parameter of the motor that determines the pivoting of the arm 7 for modifying its moving speed, for example for a given stretch of its stroke, in order to modify the cut window w.

For this purpose, the microtome can be provided with a detection system/sensor of the position of the moving arm 7 (for example, an encoder) in order to adjust the feeding parameters of the motor depending on such position, for obtaining different speeds when it is inside or outside the cut window w. The size of the cut window w can be set by the user through the interface 12.

The interface 12 and/or at least one control unit, can therefore be suitable for adjusting the retraction distance r and/or the cut window w.

In general, the interface 12 can be suitable to display and/or adjust at least one cutting parameter d, α, τ, v, Ω, r, w.

Preferably, the identification code C is arranged on at least one portion of the cassette 4, such that only one cassette 4 is associated with each identification code C, and vice versa.

Preferably, the code can be applied on the cassette 4 in a determined direction and /or in determined portions of the cassette 4, for example in such a way that it can be read only if the cassette 4, and therefore the specimen contained in it, is placed in the correct orientation.

Nevertheless, it should be noted that the identification code C can be identified (acquired) even when the cassette 4 is not inserted in the cassette-holder device 3. According to a possible embodiment, as usual with standard cassettes, the identification code C is placed on a tilted lateral surface provided on the standard cassette.

Further embodiments can envisage that the cassette is shaped for placing it inside the cassette-holder device, always in a determined direction. The cassette-holder device can provide a clamp rotatable around an axis of the arm 7, in order to adjust the orientation of the specimen, when the cassette is fastened to the cassette-holder device. Therefore, the code C can be associated with the cutting parameter Ω relative to the orientation of the specimen, that is the angular position of the cassette-holder device, with respect to a zero position in which the operator can place and fasten the cassette to the clamp of the cassette-holder device. Such parameter is adjusted automatically by means of a further motor, for example with the aid of encoders, or generally sensors for determining the angular position.

It should be noted that the term identification code C is intended to indicate generally a code containing information including, for example, data concerning the specimen contained in it, identification data of the patient, information on withdrawal date and time, information on analysis to do on the specimen, etc.

Preferably, the identification code C can be a read only code, like for example a monodimensional, or bidimensional (for example, a data-matrix type) code, or a bar code, that can be applied to the cassette 4 in an easy and quick way, for example in form of an adhesive label or directly printed on the cassette, with appropriate writing/tagging means.

Further embodiments can envisage that the identification code C is of magnetic type (that can be for example applied to the cassette in form of a magnetic tape) or an RFID code (that can be applied in form of a tag or a transponder), generally codes in which both reading and writing are enabled.

Means 5 for acquiring the identification code C can comprise an optical reader for reading a bidimensional code (data-matrix) and/or a bar code or, in case codes enabled for both reading and writing are used, means for acquiring the identification code can comprise a magnetic reader and/or a RFID transceiver for reading and writing an identification code and /or at least one cutting parameter d, α, τ, v, Ω, r, w.

It is also possible that means 5 allow the writing of identification codes, also of bidimensional codes (data-matrix) and/or a bar code.

Means 5 for acquiring the identification code C can be advantageously placed in the cassette-holder device 3 in such way that simultaneously with the step in which the operator places the cassette 4 in the cassette-holder device 3, means 5 can automatically detect and reliably acquire the identification code C. Further embodiments can anyway envisage that means 5 for acquiring the identification C are external to the microtome, namely means 5 in form of one or more external units, connected to the microtome, for example, through one or more cables.

The microtome 1 is preferably provided and connected with a memory 11 that can be internal and/or external to the microtome. Inside the memory 11 a database, in which it is possible to associate to each identification code C acquired one or more cutting parameters d, α, τ, v, Ω adapted for the sectioning, is present. In case the identification code is enabled for reading and writing (for example an RFID or a magnetic code), one or more cutting parameters can be stored inside the code, namely the code can be constituted by a string of values codified in order to contain inside the string both the identification code C and one or more cutting parameters d, α, τ, v, Ω, r, w. Thus, the code C can be updated through acquiring means 5 that are, in the latter case, able to read the identification code and to modify the cutting parameters contained in it. Indeed, according to a possible embodiment, the memory 11 can comprise a portion of the identification code C of the cassette 4 or can comprise a portion of a further identification code of the cassette.

According to an advantageous aspect of the present invention, at least one value of at least one cutting parameter (d, α, τ, v, Ω, r, w) adapted for the sectioning that is associated to the identification code C is determined depending on the value set by the adjusting means, preferably by an operator.

According to a further aspect of the invention, the at least one value of at least one cutting parameter (d, α, τ, v, Ω, r, w) adapted for the sectioning that is associated to the identification code C is preferably input and/or selected among a plurality of values by an operator, depending on the identification code C.

In this regard, the microtome, or a device connected to it can be provided with an user interface 12, for example, for the input of appropriate values of one or more cutting parameters.

Usually, the value is input and /or selected depending on the identification code read and thus on the specimen of tissue contained in it.

According to the present invention, the microtome allows advantageously to associate to the identification code the distance d between the cassette-holder 3 and the blade-holder 2 set (attained) during the roughing procedure, or in a first sectioning procedure, of the specimen of biological material.

In this regard, the adjusting means comprise means 9 for moving the cassette-holder device 3 with respect to the blade holder device 2, or vice versa, for adjusting the distance d between them. The value of the distance d between the blade-holder device 2 and the cassette-holder device 3, associated to the identification code C, is determined depending on the value set by means for moving the cassette-holder device 3 with respect to the blade-holder device 2, or vice versa.

The value of the distance d is the value set during the roughing procedure of the specimen of biological material, preferably the value set (attained) at the end of the roughing procedure, when part of the block 10 that contains the sample has been cut and thus the specimen of biological material is ready for being sectioned.

Such position, that is the distance d reached after at least the cut of a section for the roughing of the block, is the distance adapted of carrying out the sectioning. The value set (attained) during the roughing procedure, preferably at the end of the roughing procedure, is associated to the identification code C of the cassette.

The steps of the method for sectioning specimen of biological material embedded in a block 10 contained in a cassette 4 according to the present invention will be now described.

It should be noted that the method is carried out with the microtome according to the present invention.

The method according to the invention comprises a roughing procedure, in which the specimen of biological material embedded in the block 10 is prepared for the sectioning, or for a first sectioning procedure, during which the specimen of biological material is sectioned. As mentioned, the method comprises a successive sectioning procedure, in which a plurality of sections of the specimen of biological material are cut.

It should be noted that according to a possible embodiment, the roughing procedure comprises the cut of at least one section of the block, in order to expose the specimen of biological material for sectioning.

The method is characterized in that the roughing procedure and, generally the preparation step of the specimen for the sectioning, or for a first sectioning procedure, comprises the step of fastening a cassette 4 to a cassette-holder device 3, the step of acquiring an identification code C associated with the cassette 4 and the step of determining at least one value of one cutting parameter d, α, τ, v, Ω, r, w adapted for the sectioning of the specimen of biological material.

In more detail, the operator places the cassette 4 in the cassette-holder device 3, then the identification code C associated with the cassette 4 is acquired and the operator can display information about the specimen contained in the identification code C by means of an interface 12 (i.e., a display), if present.

The method comprises also the step of associating said at least one value of at least one cutting parameter (d, α, τ, v, Ω, r, w) adapted for the sectioning of the specimen of biological material to the identification code C of said cassette 4.

The identification code C and the at least one value of at least one cutting parameter adapted for the sectioning, associated with it, are preferably stored in a memory unit 11.

According to an aspect of the present invention, the step of determining at least one cutting parameter d, α, τ, v, Ω, r, w on at least one value adapted for the sectioning (that is the step of determining at least one value of at least one cutting parameter d, α, τ, v, Ω, r, w adapted for the sectioning) comprises the step of setting the adjusting means 6, 9, 20, 21, 22, 23, 24 of at least one cutting parameter d, α, τ, v, Ω, r, w on at least one value adapted for the sectioning.

In other words, during the roughing procedure, or during the first sectioning procedure, the adjusting means of the cutting parameters can be set on a value adapted for the sectioning of the specimen.

The set value, preferably set by an operator, is preferably the one attained at the end of the roughing procedure, when the specimen is ready for being sectioned.

For example, according to method according to the present invention, during the roughing procedure, the set value of the distance d of the cassette holder 3 with respect to the blade holder 2, adapted for the sectioning of the specimen of biological material determines the value associated to the identification code C of the cassette 4.

Indeed, during the roughing of the block 10 and, in particular at the end of the roughing procedure, the cutting parameter d corresponding to the distance between the blade holder device 2 and the cassette holder device 3 is automatically stored in the memory 11. Furthermore, as it will be seen hereinafter, the operator can adjust, from the microtome itself or through the interface 12 (if present), further cutting parameters adapted for the sectioning of the specimen and store them in the memory.

The same can be said for the at least one value of one or more cutting parameters, on which the adjusting means are set during the first sectioning procedure.

Indeed, at the end of the roughing of the block, or a first sectioning procedure, the database will be automatically updated and the set value of said adjusting means is associated to the identification code C and in particular, as described above, the cutting parameter d concerning the distance between the blade-holder device 2 and the cassette-holder device 3.

This feature allows to separate the roughing procedure, or the first sectioning procedure, from a successive sectioning procedure, that is the successive sectioning procedure that can be carried out even at another time, without being necessary that the operator obtains again the parameter d, risking to assume the wrong position and to waste specimen sections worthlessly and to damage the block 10.

As mentioned, according to a possible embodiment, during the roughing step, or during the first sectioning procedure, a cut of at least one section of the block 10 that contains the specimen of biological material is carried out. Consequently, during the roughing procedure, the adjusting means of at least one cutting parameter are set on at least one value adapted for the sectioning and are preferably set for carrying out at least one roughing cut of the block 10.

The at least one value of at least one cutting parameter adapted for the sectioning corresponds to the value set, or attained, by the adjusting means at the end of the roughing procedure, when the specimen is ready for the sectioning and in which preferably at least one section of the block 10 has been cut for making the specimen of biological material accessible for the sectioning.

As mentioned, according to a possible embodiment, the step for determining at least one cutting parameter (d, α, τ, v, Ω, r, w) on at least one value adapted for the sectioning comprises the step of inputting and/or selecting among a plurality of values, carried out preferably by an operator.

In other words, during the roughing procedure, or during a first sectioning procedure, one or more values of one or more cutting parameters can be preferably input by an operator, for example through an interface 12 of the microtome or of a device connected to it.

One value adapted for the sectioning of one cutting parameter can be input, or a value can be chosen among a plurality of predetermined values.

Preferably, the value adapted for the sectioning can be input depending on the identification code C, and thus depending on the information about the specimen of biological material that are displayed and provided following the reading (acquiring) of the identification code C. For example, in addition to the above mentioned cutting parameter d, the reading of the identification code C indicates the contents of the cassette 4, a given tissue, and the operator decides, during the roughing step, that the specimen will be sectioned during the successive sectioning procedure with a cutting thickness of 10 micron.

Thus, the operator inputs and/or selects the value of the cutting parameter relative to the thickness of a determined value that is associated to the identification code C of the cassette. Consequently, during the successive sectioning procedure, the specimen will be sectioned with the thickness that has been input.

The same is for other cutting parameters that can be, alternatively or in combination with the determined value depending on the value set during the roughing step or during a first sectioning procedure, input and /or selected, preferably depending on the identification code C and thus depending on the information about the specimen of biological material.

It should be noted that, the roughing procedure, or the first sectioning procedure, comprise the step of removing the cassette 4 from the cassette-holder device 3 after carrying out the steps from a) to d). In other words, the cassette 4 is removed from the cassette-holder device 3 at the end of the association of at least one value of at least one cutting parameter adapted for the sectioning to the identification code C.

Indeed, the successive sectioning procedure of the cassette 4 is done separately from the roughing one or from the first sectioning procedure (at a later time) in the same microtome or in an example which is not part of the present invention, in another microtome. In this latter case, the further microtome has anyway access to the database containing data relative to the identification code C and the relative values of cutting parameters adapted for the sectioning of the specimen.

Preferably, the method according to the invention comprises the step of carrying out the roughing procedure of the block 10, or a first sectioning procedure, and preferably the steps a)-d) of claim 10, on a plurality of cassettes 4 that are removed from the cassette-holder device 3 at the end of the roughing, or the first sectioning procedure.

The method comprises the step of carrying out at least on successive sectioning procedure of the cassettes, successively.

According to an aspect of the method according to the present invention, the successive sectioning procedure comprises the steps of acquiring the identification code C of the cassette 4 and the step of setting again (place again) the adjusting means of at least one cutting parameter depending on the at least one value adapted for the sectioning associated to the identification code C during the roughing procedure or during the first (preceding) sectioning procedure.

Indeed, in case the specimen embedded in an already roughed block (or previously sectioned) must be sectioned, the operator can display, after positioning the cassette 4 in the cassette-holder device 3, for example the identification code C and the possible cutting parameters associated with it, for example in an interface 12.

Furthermore, thanks to adjusting means, one or more cutting parameters associated to the identification code of the cassette, including the parameter d, are automatically set taking back the adjusting means in order to assume the values of the cutting parameters adapted for the sectioning associated to the identification code of the cassette.

Preferably, with reference to the cutting parameter relative to the distance d from the blade holder device 2 to the cassette holder device 3, the cassette holder device 3 is moved by sliding it on the guide 9 until reaching the position adapted for the cutting, that is at a distance d from the blade-holder device 2. Such distance d is the cutting parameter determined and stored in the preceding roughing step on that particular block 10.

In particular, the distance d corresponds to the distance acquired during the preceding sectioning procedure, or during the rouging procedure, preferably following the cut of at least one section for determining the roughing of the block and for making the specimen of biological material adapted for the sectioning.

Similarly, also the other cutting parameters α, τ, v, Ω, r, w can be automatically, adjusted, for taking the microtome 1 back to the arrangement acquired at the end of the roughing procedure.

In an example which is not part of the present invention, in case of a manual adjustment, the operator can, for example, control if the cutting parameters are correctly adjusted, through the interface 12. The control can take place, for example, with a visual feedback, that is, the actual value and the stored value for each cutting parameter are displayed on the display, such that the operator can manually regulate the cutting parameters d, α, τ, v, Ω until the stored values are attained.

According to a second advantageous aspect of the present invention it is possible to obtain an automatic adjustment of one or more cutting parameters d, α, τ, v, Ω, r, w for the correct sectioning of a specimen embedded in an already roughed block, optimizing in such way the times necessary for the sectioning of an elevated number of specimens and reducing the possibility of making errors by the operator. Obviously, the successive sectioning procedure comprises the step of fastening the cassette on the cassette holder device 3, preferably before acquiring the identification code C.

Obviously, the method comprises the step of removing the sectioned cassette 4 from the cassette holder device 3 at the end of the sectioning of the specimen contained in it. Preferably, a further cassette 4, previously roughed, or previously sectioned, and on which it is desired to carry out a (further) successive sectioning procedure, is further fastened to the cassette-holder device 3.

## Claims

1. Microtome (1) for sectioning specimens of biological material, comprising a blade-holder device (2) on which a cutting blade (8) is supported, a cassette-holder device (3) for supporting a cassette (4) containing a block for the embedding (10) of a specimen of biological material and means (6, 9, 20, 21, 22, 23, 24) for adjusting at least one cutting parameter (d, α, τ, v, Ω, r, w), further comprising means (5) for acquiring an identification code (C) associated with said cassette (4) and means (11) for associating to said identification code (C) of said cassette (4) at least one value of at least one cutting parameter adapted for the sectioning of said at least one specimen of biological material, the microtome being configured such that said at least one value of at least one cutting parameter (d, α, τ, v, Ω, r, w) adapted for the sectioning of said specimen of biological material is associated with said identification code (C) in a roughing procedure of said specimen of biological material, or in a first sectioning procedure of said specimen of biological material and is used in a successive sectioning procedure of a plurality of sections of the specimen of biological material,
wherein the microtome is configured in such a way that the cassette (4) is removed from the cassette-holder device (3) after a roughing procedure, or a first sectioning procedure of said specimen of biological material have been carried out and then reinserted in the cassette holder device (3) for a successive sectioning procedure,
wherein said adjusting means (6, 9, 20, 21, 22, 23, 24) are connected to a control unit so that said adjusting means (6, 9, 20, 21, 22, 23, 24) of at least one cutting parameter (d, α, τ, v, Ω, r, w) are configured to be automatically set again during the successive sectioning procedure depending on the at least one value of at least one cutting parameter adapted for the sectioning associated with said identification code (C) during the roughing procedure, or during the first sectioning procedure,
wherein said at least one value of at least one cutting parameter (d, α, τ, v, Ω, r, w) adapted for the sectioning corresponds to the value set, or attained, by the adjusting means (6, 9, 20, 21, 22, 23, 24) of at least one cutting parameter (d, α, τ, v, Ω, r, w) at the end of the roughing procedure, or at the end of said first sectioning procedure, wherein said at least one value of at least one cutting parameter (d, α, τ, v, Ω, r, w) adapted for the sectioning comprises the value of the distance (d) between said blade holder device (2) and said cassette holder device (3) used at the end of the roughing procedure, or at the end of a first sectioning procedure of said specimen of biological material.

2. Microtome (1) according to claim 1, wherein one cutting parameter adapted for the sectioning of said specimen of biological material is selected among the tilt (α) of the blade (8) with respect to said cassette-holder device (3), the cutting speed (v) with which said specimen is sectioned, the thickness (τ) with which the section of said specimen is made, the orientation (Ω) of said specimen of biological material with respect to the blade (8), the retraction distance (r), the cut window (w), or a combination of one or more of the preceding parameters (d, α, τ, v, Ω, r, w).

3. Microtome (1) according to any one of the preceding claims, wherein said means for adjusting at least one cutting parameter (d, α, τ, v, Ω, r, w) comprise means (9) for moving said cassette-holder device (3) with respect to said blade-holder device (2), or vice versa, means (20) for moving said blade (8) with respect to said blade-holder device (2), means (21) for adjusting the movement speed of said cassette-holder device (3) with respect to said blade-holder device (2), means (6) for adjusting the advance of said cassette-holder device (3) with respect to said blade-holder device (2), means (22) for rotating and/or tilting said cassette (4) with respect to said blade (8), means (23) for adjusting the retraction distance (r), means (24) for adjusting the size of the cut window (w), or a combination of one or more of the preceding ones.

4. Microtome according to any one of the preceding claims, wherein said at least one value of at least one cutting parameters (d, α, τ, v, Ω, r, w) adapted for the sectioning of said specimen of biological material associated with said identification code (C), is determined depending on the set value of said adjusting means (6, 9, 20, 21, 22, 23, 24), preferably set by an operator, and/or it is the at least one input or selected value among a plurality of values, preferably by an operator, preferably depending on said identification code (C).

5. Microtome (1) according to any one of the preceding claims, wherein said means for associating said at least one value of at least one cutting parameter adapted for the sectioning of the specimen, comprise an inner and/or outer memory (11) to store said at least one value of at least one cutting parameter adapted for the sectioning (d, α, τ, v, Ω, r, w) associated with said identification code (C), preferably, said memory (11) is a portion of said identification code (C) of said cassette (4), or a portion of an additional identification code of said cassette (4).

6. Microtome according to any one of the preceding claims, wherein said means for adjusting at least one cutting parameter (d, α, τ, v, Ω, r, w) comprise means (9) for moving said cassette-holder device (3) with respect to said blade-holder device (2), or vice versa, for adjusting the distance (d) between said blade-holder device (2) and said cassette-holder device (3), wherein said at least one value of the distance (d) between said blade-holder device (2) and said cassette-holder device (3) associated with said identification code is determined depending on the set value of said means (9) for moving said cassette-holder device (3) with respect to said blade-holder device (2), or vice versa.

7. Microtome (1) according to any one of the preceding claims, wherein said means (5) for acquiring said identification code (C) comprise a bar code reader and/or a two dimensional code reader and/or a RFID code reader and/or a magnetic code reader.

8. Microtome (1) according to any one of the preceding claims, wherein said identification code (C) is arranged on at least one portion of said cassette (4).

9. Microtome (1) according to any one of the preceding claims, wherein said means (5) for acquiring said identification code (C) are outside of said microtome (1) and/or placed on said microtome (1).

10. Method for sectioning specimens of biological material included in a block (10) contained in a cassette (4) by means of a microtome (1) according to any one of claims 1 to 9, the cassette comprising at least one identification code (C), the method comprising a roughing procedure in which said specimen of biological material embedded in said block is prepared for being sectioned, or a first sectioning procedure of said specimen of biological material, wherein said roughing procedure, or said first sectioning procedure, comprises the steps of:
a) fastening a cassette (4) containing a block (10) for the embedding of a specimen of biological material to a cassette-holder device (3);
b) determining at least one value of at least one cutting parameter (d, α, τ, v, Ω, r, w) adapted for the sectioning of the specimen of biological material;
c) acquiring an identification code (C) associated with said cassette (4)
d) associating said at least one value of at least one cutting parameter (d, α, τ, v, Ω, r, w) adapted for the sectioning of said specimen of biological material to the identification code (C) of said cassette (4);
the method comprising the additional step of removing the cassette from the cassette-holder device (3) after the steps a) to d) have been carried out,
the method comprising also at least one successive sectioning procedure, in which a plurality of sections of the specimen of biological material are cut, which is carried out after the roughing procedure, or after said first sectioning procedure, in which said at least one value of at least one cutting parameter (d, α, τ, v, Ω, r, w) adapted for the sectioning of said sample of biological material associated with said identification code (C) in said roughing procedure, or in said first sectioning procedure, is used in said successive procedure of sectioning of a plurality of sections of the specimen of biological material, wherein said successive sectioning procedure comprises the step of fastening a cassette (4) to the cassette-holder device (3); the step of acquiring the identification code (C) of said cassette (4) and the step of setting again the adjusting means (6, 9, 20, 21, 22, 23, 24) of at least one cutting parameter (d, α, τ, v, Ω, r, w) depending on the at least one value adapted for the sectioning associated to said identification code (C) during the roughing procedure, or the first sectioning procedure,
wherein the at least one value of at least one cutting parameter (d, α, τ, v, Ω, r, w) adapted for the sectioning corresponds to the value set, or attained, by the adjusting means (6, 9, 20, 21, 22, 23, 24) of at least one cutting parameter (d, α, τ, v, Ω, r, w) at the end of the roughing procedure, or at the end of said first sectioning procedure, wherein said at least one value of at least one cutting parameter (d, α, τ, v, Ω, r, w) adapted for the sectioning comprises the value of the distance (d) between said blade holder device (2) and said cassette holder device (3) used at the end of the roughing procedure, or at the end of said first sectioning procedure of said specimen of biological material.

11. Method according to claim 10, wherein the step of determining at least one cutting parameter (d, α, τ, v, Ω, r, w) on at least one value adapted for the sectioning comprises the step of setting the adjusting means (6, 9, 20, 21, 22, 23, 24) of at least one cutting parameter (d, α, τ, v, Ω, r, w) on at least one value adapted for the sectioning, preferably, said adjusting means (6, 9, 20, 21, 22, 23, 24) are set to carry out at least one roughing cut, or a sectioning cut, of the block (10), said at least one value of at least one cutting parameter adapted for the sectioning corresponding to the value, preferably set by an operator, of said adjusting means to carry out at least one roughing cut, or a sectioning cut, of the block (10).

12. Method according any one of claims 10 to 11 wherein the step of determining at least one cutting parameter (d, α, τ, v, Ω, r, w) on at least one value adapted for the sectioning comprises the step of input, or selecting among a plurality of values, preferably by an operator, at least one value adapted for the sectioning of at least one cutting parameter (d, α, τ, v, Ω, r, w), preferably depending on the identification code (C).

## Patentansprüche

1. Mikrotom (1) zum Schneiden von Proben aus biologischem Material, mit einer Klingenhaltevorrichtung (2), auf der eine Schneidklinge (8) getragen wird, einer Kassettenhaltevorrichtung (3) zum Tragen einer Kassette (4) mit einem Block für das Einbetten (10) einer Probe aus biologischem Material und Mittel (6, 9, 20, 21, 22, 23, 24) zum Einstellen mindestens eines Schneidparameters (d, α, τ, v, Ω, r, w), weiterhin enthaltend Mittel (5) zum Erfassen eines der Kassette (4) zugeordneten Identifikationscodes (C) und Mittel (11) zum Zuordnen von mindestens einem Wert mindestens eines zum Schneiden der Probe biologischen Materials geeigneten Schneidparameters zu dem Identifikationscode (C) der Kassette (4), wobei das Mikrotom so konfiguriert ist, dass der mindestens eine Wert des mindestens einen zum Schneiden der Probe biologischen Materials geeigneten Schneidparameters (d, α, τ, v, Ω, r, w) dem Identifikationscode (C) in einer Grobbearbeitung der Probe biologischen Materials oder in einem ersten Schneidvorgang der Probe biologischen Materials zugeordnet ist, und in einem folgenden Schneidvorgang einer Vielzahl von Schnitten der Probe biologischen Materials verwendet wird,
wobei das Mikrotom auf eine Weise konfiguriert ist, dass die Kassette (4) nach Durchführen einer Grobbearbeitung oder eines ersten Schneidvorgangs der Probe biologischen Materials von der Kassettenhaltevorrichtung (3) entfernt wird, und dann in die Kassettenhaltevorrichtung (3) für einen nachfolgenden Schneidvorgang wiedereingeführt wird,
wobei die Einstellmittel (6, 9, 20, 21, 22, 23, 24) mit einer Steuereinheit verbunden sind, so dass die Einstellmittel (6, 9, 20, 21, 22, 23, 24) für mindestens einen Schneidparameter (d, α, τ, v, Ω, r, w) konfiguriert sind, während des nachfolgenden Schneidvorgangs automatisch wieder eingestellt zu werden, in Abhängigkeit von dem mindestens einen Wert mindestens eines zum Schneiden geeigneten Schneidparameters, der dem Identifikationscode (C) während der Grobbearbeitung oder während des ersten Schneidvorgangs zugeordnet ist;
wobei der mindestens eine Wert des mindestens einen zum Schneiden geeigneten Schneidparameters (d, α, τ, v, Ω, r, w), dem Wertesatz entspricht oder diesen mittels der Einstellmittel (6, 9, 20, 21, 22, 23, 24) des mindestens einen Schneidparameters (d, α, τ, v, Ω, r, w) am Ende der Grobbearbeitung oder am Ende des ersten Schneidvorgangs erreicht,
wobei der mindestens eine Wert des mindestens einen zum Schneiden geeigneten Schneidparameters (d, α, τ, v, Ω, r, w) den Wert des Abstands (d) zwischen der Klingenhaltevorrichtung (2) und der Kassettenhaltevorrichtung (3) enthält, der am Ende der Grobbearbeitung oder am Ende des ersten Schneidvorgangs der Probe biologischen Materials verwendet wird.

2. Mikrotom (1) gemäß Anspruch 1, wobei ein zum Schneiden der Probe biologischen Materials geeigneter Schneidparameter ausgewählt ist aus der Neigung (α) der Klinge (8) in Bezug auf die Kassettenhaltevorrichtung (3), der Schnittgeschwindigkeit (v), mit der die Probe geschnitten wird, der Dicke (T), mit der der Schnitt der Probe hergestellt wird, der Orientierung (Ω) der Probe aus biologischem Material in Bezug auf die Klinge (8), der Rückzugsstrecke (r), dem Schnittfenster (w) oder einer Kombination aus einem oder mehreren der vorhergehenden Parameter (d, α, τ, v, Ω, r, w).

3. Mikrotom (1) gemäß irgendeinem der vorhergehenden Ansprüche, wobei die Mittel zum Einstellen mindestens eines Schneidparameters (d, α, τ, v, Ω, r, w) Mittel (9) zum Bewegen der Kassettenhaltevorrichtung (3) in Bezug auf die Klingenhaltevorrichtung (2) oder umgekehrt umfassen, Mittel (20) zum Bewegen der Klinge (8) in Bezug auf die Klingenhaltevorrichtung (2), Mittel (21) zum Einstellen der Bewegungsgeschwindigkeit der Kassettenhaltevorrichtung (3) in Bezug auf die Klingenhaltevorrichtung (2), Mittel (6) zum Einstellen des Vorschubs der Kassettenhaltevorrichtung (3) in Bezug auf die Klingenhaltevorrichtung (2), Mittel (22) zum Drehen und/oder Neigen der Kassette (4) in Bezug auf das Messer (8), Mittel (23) zum Einstellen des Rückzugsabstands (r), Mittel (24) zum Einstellen der Größe des Schnittfensters (w) oder eine Kombination aus einem oder mehreren der vorhergehenden.

4. Mikrotom gemäß irgendeinem der vorhergehenden Ansprüche, wobei der mindestens eine Wert des mindestens einen zum Schneiden der Probe biologischen Materials geeigneten Schneidparameters (d, α, τ, v, Ω, r, w), der dem Identifikationscode (C) zugeordnet ist, abhängig vom eingestellten Wert der Einstellmittel (6, 9, 20, 21, 22, 23, 24), vorzugsweise von einer Bedienperson eingestellt, bestimmt wird und/oder es sich um die mindestens eine Eingabe oder um den ausgewählten Wert aus einer Vielzahl von Werten handelt, vorzugsweise von einer Bedienperson ausgewählt, vorzugsweise in Abhängigkeit von dem Identifikationscode (C).

5. Mikrotom (1) gemäß irgendeinem der vorhergehenden Ansprüche, wobei die Mittel zum Zuordnen des mindestens einen Wertes mindestens eines zum Schneiden der Probe geeigneten Schneidparameters einen inneren und/oder äußeren Speicher (11) aufweist zum Speichern des mindestens einen Wertes mindestens eines zum Schneiden geeigneten Schneidparameters (d, α, τ, v, Ω, r, w), der dem Identifikationscode (C) zugeordnet ist, wobei der Speicher (11) vorzugsweise ein Teil des Identifikationscodes (C) der Kassette (4) oder ein Teil eines zusätzlichen Identifikationscodes der Kassette (4) ist.

6. Mikrotom gemäß irgendeinem der vorhergehenden Ansprüche, wobei die Mittel zum Einstellen mindestens eines Schneidparameters (d, α, τ, v, Ω, r, w) Mittel (9) zum Bewegen der Kassettenhaltevorrichtung (3) bezüglich der Klingenhaltevorrichtung (2) oder umgekehrt umfassen, zum Einstellen des Abstands (d) zwischen der Klingenhaltevorrichtung (2) und der Kassettenhaltevorrichtung (3), wobei der mindestens eine Wert des Abstands (d) zwischen der Klingenhaltevorrichtung (2) und der Kassettenhaltevorrichtung (3), die dem Identifikationscode zugeordnet ist, in Abhängigkeit von dem eingestellten Wert der Mittel (9) zum Bewegen der Kassettenhaltevorrichtung (3) in Bezug auf die Klingenhaltevorrichtung (2) oder umgekehrt bestimmt wird.

7. Mikrotom (1) gemäß irgendeinem der vorhergehenden Ansprüche, wobei die Mittel (5) zum Erfassen des Identifikationscodes (C) einen Strichcodeleser und/oder einen Leser für einen zweidimensionalen Code und/oder einen RFID-Codeleser und/oder einen Leser für einen magnetischen Code umfassen.

8. Mikrotom (1) gemäß irgendeinem der vorhergehenden Ansprüche, wobei der Identifikationscode (C) auf mindestens einem Abschnitt der Kassette (4) angeordnet ist.

9. Mikrotom (1) gemäß irgendeinem der vorhergehenden Ansprüche, wobei die Mittel (5) zum Erfassen des Identifikationscodes (C) außerhalb des Mikrotoms (1) und/oder auf dem Mikrotom (1) angeordnet sind.

10. Verfahren zum Schneiden von Proben eines biologischen Materials, die in einem Block (10) enthalten sind, der in einer Kassette (4) enthalten ist, mittels eines Mikrotoms (1) gemäß irgendeinem der Ansprüche 1 bis 9, wobei die Kassette mindestens einen Identifikationscode (C) umfasst, wobei das Verfahren eine Grobbearbeitung umfasst, bei der die in dem Block eingebettete Probe aus biologischem Material zum Schneiden vorbereitet wird, oder einen ersten Schneidvorgang der Probe aus biologischem Material umfasst, wobei die Grobbearbeitung oder der erste Schneidvorgang die folgenden Schritte umfasst:
a) Befestigen einer Kassette (4), die einen Block (10) zum Einbetten einer Probe eines biologischen Materials enthält, an einer Kassettenhaltevorrichtung (3);
b) Bestimmen mindestens eines Wertes mindestens eines zum Schneiden der Probe biologischen Materials geeigneten Schneidparameters (d, α, τ, v, Ω, r, w);
c) Erfassen eines der Kassette (4) zugeordneten Identifikationscodes (C);
d) Zuordnen des mindestens einen Werts mindestens eines zum Schneiden der Probe biologischen Materials geeigneten Schneidparameters (d, α, τ, v, Ω, r, w) zu dem Identifikationscode (C) der Kassette (4);
wobei das Verfahren den zusätzlichen Schritt des Entfernens der Kassette von der Kassettenhaltevorrichtung (3) umfasst, nachdem die Schritte a) bis d) durchgeführt wurden,
wobei das Verfahren auch mindestens einen aufeinanderfolgenden Schneidvorgang umfasst, bei dem eine Vielzahl von Schnitten der Probe eines biologischen Materials geschnitten werden, der nach der Grobbearbeitung oder nach dem ersten Schneidvorgang durchgeführt wird, bei dem der mindestens eine Wert mindestens eines zum Schneiden der Probe biologischen Materials geeigneten Schneidparameters (d, α, τ, v, Ω, r, w), der dem Identifikationscode (C) in der Grobbearbeitung oder in dem ersten Schneidvorgang zugeordnet ist, in dem aufeinanderfolgenden Verfahren des Schneidens einer Vielzahl von Schnitten der Probe aus biologischem Material verwendet wird, wobei der aufeinanderfolgende Schneidvorgang den Schritt des Befestigens einer Kassette (4) an der Kassettenhaltevorrichtung (3) umfasst; den Schritt des Erfassens des Identifikationscodes (C) der Kassette (4) und den Schritt des erneuten Einstellens der Einstellmittel (6, 9, 20, 21, 22, 23, 24) des mindestens einen Schneidparameters (d, α, τ, v, Ω, r, w) in Abhängigkeit von dem mindestens einen Wert, der für das dem Identifikationscode (C) während der Grobbearbeitung oder des ersten Schneidvorgangs zugeordnete Schneiden geeignet ist,
wobei der mindestens eine Wert mindestens eines zum Schneiden geeigneten Schneidparameters (d, α, τ, v, Ω, r, w) dem Wertesatz entspricht, oder durch die Einstellmittel (6, 9, 20, 21, 22, 23, 24) mindestens eines Schneidparameters (d, α, τ, v, Ω, r, w) am Ende der Grobbearbeitung, oder am Ende des ersten Schneidvorgangs erreicht wird,
wobei der mindestens eine Wert mindestens eines zum Schneiden geeigneten Schneidparameters (d, α, τ, v, Ω, r, w), den Wert des Abstands (d) zwischen der Klingenhaltevorrichtung (2) und der Kassettenhaltevorrichtung (3) umfasst, der am Ende der Grobbearbeitung oder am Ende des ersten Schneidvorgangs der Probe des biologischen Materials verwendet wird.

11. Verfahren gemäß Anspruch 10, wobei der Schritt des Bestimmens mindestens eines Schneidparameters (d, α, τ, v, Ω, r, w) auf mindestens einen für das Schneiden geeigneten Wert, den Schritt des Einstellens der Einstellmittel (6, 9, 20, 21, 22, 23, 24) des mindestens eines Schneidparameters (d, α, τ, v, Ω, r, w) auf mindestens einen für das Schneiden geeigneten Wert umfasst, wobei vorzugsweise die Einstellmittel (6, 9, 20, 21, 22, 23, 24) eingestellt werden, um mindestens eine Grobbearbeitung oder einen Schneidvorgang des Blocks (10) auszuführen, wobei der mindestens eine Wert mindestens eines für das Schneiden geeigneten Schneidparameters dem Wert der Einstellmittel entspricht, der vorzugsweise von einer Bedienungsperson eingestellt wird, um mindestens eine Grobbearbeitung oder einen Schneidvorgang des Blocks (10) auszuführen.

12. Verfahren gemäß irgend einem der Ansprüche 10 bis 11, wobei der Schritt des Bestimmens mindestens eines Schneidparameters (d, α, τ, v, Ω, r, w) auf mindestens einen für das Schneiden geeigneten Wert den Schritt des Eingebens oder Auswählens aus einer Vielzahl von Werten, vorzugsweise durch eine Bedienperson, mindestens eines für das Schneiden geeigneten Wertes mindestens eines Schneidparameters (d, α, τ, v, Ω, r, w), vorzugsweise in Abhängigkeit von dem Identifikationscode (C) umfasst.

## Revendications

1. Microtome (1) pour sectionner des spécimens de matériau biologique, comprenant un dispositif porte-lame (2) sur lequel est supportée une lame coupante (8), un dispositif porte-cassette (3) pour supporter une cassette (4) contenant un bloc pour l'inclusion (10) d'un spécimen de matériau biologique et des moyens (6, 9, 20, 21, 22, 23, 24) pour ajuster au moins un paramètre de coupe (d, α, τ, v, Ω, r, w), comprenant en outre des moyens (5) pour acquérir un code d'identification (C) associé à ladite cassette (4) et des moyens (11) pour associer audit code d'identification (C) de ladite cassette (4) au moins une valeur d'au moins un paramètre de coupe adapté à la section dudit au moins un spécimen de matériau biologique, le microtome étant configuré de telle sorte que ladite au moins une valeur d'au moins un paramètre de coupe (d, α, τ, v, Ω, r, w) adapté pour la section dudit spécimen de matériau biologique est associée audit code d'identification (C) dans une procédure de dégrossissage dudit spécimen de matériau biologique, ou dans une première procédure de section dudit spécimen de matériau biologique et est utilisée dans une procédure de sectionnement successive d'une pluralité de sections du spécimen de matériau biologique,
dans lequel le microtome est configuré de telle manière que la cassette (4) est retirée du dispositif porte-cassette (3) après une procédure de dégrossissage, ou une première procédure de sectionnement dudit spécimen de matériau biologique ont été effectuées et ensuite réinsérée dans le dispositif de support de cassette (3) pour une procédure de sectionnement successive,
dans lequel lesdits moyens de réglage (6, 9, 20, 21, 22, 23, 24) sont connectés à une unité de commande de sorte que lesdits moyens de réglage (6, 9, 20, 21, 22, 23, 24) d'au moins un paramètre de coupe (d, α, τ, v, Ω, r, w) sont configurés pour être automatiquement réglés à nouveau pendant la procédure de sectionnement successive en fonction dudit au moins une valeur d'au moins un paramètre de coupe adapté au sectionnement associé audit code d'identification (C) pendant la procédure de dégrossissage, ou pendant la première procédure de sectionnement,
dans lequel ladite au moins une valeur d'au moins un paramètre de coupe (d, a, τ, v, Ω, r, w) adapté au sectionnement correspond à la valeur fixée, ou atteinte, par les moyens de réglage (6, 9, 20, 21, 22, 23, 24) d'au moins un paramètre de coupe (d, α, τ, v, Ω, r, w) à la fin de la procédure de dégrossissage, ou à la fin de ladite première procédure de sectionnement,
dans lequel ladite au moins une valeur d'au moins un paramètre de coupe (d, α, τ, v, Ω, r, w) adaptée à la section comprend la valeur de la distance (d) entre ledit dispositif porte-lame (2) et ledit dispositif porte-cassette (3) utilisée à la fin de la procédure de dégrossissage, ou à la fin d'une première procédure de section dudit spécimen de matériau biologique.

2. Microtome (1) selon la revendication 1, dans lequel un paramètre de coupe adapté pour la section dudit spécimen de matériau biologique est sélectionné parmi l'inclinaison (α) de la lame (8) par rapport audit dispositif porte-cassette (3), la vitesse de coupe (v) avec laquelle ledit spécimen est sectionné, l'épaisseur (τ) avec laquelle la section dudit spécimen est réalisée, l'orientation (Ω) dudit spécimen de matériau biologique par rapport à la lame (8), la distance de rétraction (r), la fenêtre de coupe (w), ou une combinaison d'un ou plusieurs des paramètres précédents (d, α, τ, v, Ω, r, w).

3. Microtome (1) selon l'une quelconque des revendications précédentes, dans lequel lesdits moyens de réglage d'au moins un paramètre de coupe (d, α, τ, v, Ω, r, w) comprennent des moyens (9) pour déplacer ledit dispositif porte-cassette (3) par rapport audit dispositif porte-lame (2), ou vice versa, des moyens (20) pour déplacer ladite lame (8) par rapport audit dispositif porte-lame (2), des moyens (21) pour régler la vitesse de déplacement dudit dispositif porte-cassette (3) par rapport audit dispositif porte-lame (2), des moyens (6) pour régler l'avance dudit dispositif porte-cassette (3) par rapport audit dispositif porte-lame (2), des moyens (22) pour faire tourner et/ou basculer ladite cassette (4) par rapport à ladite lame (8), des moyens (23) pour régler la distance de rétraction (r), des moyens (24) pour régler la taille de la fenêtre de coupe (w), ou une combinaison d'un ou plusieurs des précédents.

4. Microtome selon l'une quelconque des revendications précédentes, dans lequel ladite au moins une valeur d'au moins un paramètre de coupe (d, α, τ, v, Ω, r, w) adapté à la section dudit spécimen de matériau biologique associé audit code d'identification (C), est déterminée en fonction de la valeur de consigne desdits moyens de réglage (6, 9, 20, 21, 22, 23, 24), de préférence fixée par un opérateur, et/ou c'est ladite au moins une valeur d'entrée ou sélectionnée parmi une pluralité de valeurs, de préférence par un opérateur, de préférence en fonction dudit code d'identification (C).

5. Microtome (1) selon l'une quelconque des revendications précédentes, dans lequel lesdits moyens pour associer ladite au moins une valeur d'au moins un paramètre de coupe adapté pour la section du spécimen, comprennent une mémoire interne et/ou externe (11) pour stocker ladite au moins une valeur d'au moins un paramètre de coupe adapté pour la section (d, α, τ, v, Ω, r, w) associée audit code d'identification (C), de préférence, ladite mémoire (11) est une partie dudit code d'identification (C) de ladite cassette (4), ou une partie d'un code d'identification supplémentaire de ladite cassette (4).

6. Microtome selon l'une quelconque des revendications précédentes, dans lequel lesdits moyens de réglage d'au moins un paramètre de coupe (d, α, τ, v, Ω, r, w) comprennent des moyens (9) pour déplacer ledit dispositif porte-cassette (3) par rapport audit dispositif porte-lame (2), ou inversement, pour régler la distance (d) entre ledit dispositif porte-lame (2) et ledit dispositif porte-cassette (3), dans lequel ladite au moins une valeur de la distance (d) entre ledit dispositif porte-lames (2) et ledit dispositif porte-cassettes (3) associée audit code d'identification est déterminée en fonction de la valeur de consigne desdits moyens (9) pour déplacer ledit dispositif porte-cassettes (3) par rapport audit dispositif porte-lames (2), ou vice versa.

7. Microtome (1) selon l'une quelconque des revendications précédentes, dans lequel lesdits moyens (5) d'acquisition dudit code d'identification (C) comprennent un lecteur de code à barres et/ou un lecteur de code bidimensionnel et/ou un lecteur de code RFID et/ou un lecteur de code magnétique.

8. Microtome (1) selon l'une quelconque des revendications précédentes, dans lequel ledit code d'identification (C) est disposé sur au moins une partie de ladite cassette (4).

9. Microtome (1) selon l'une quelconque des revendications précédentes, dans lequel lesdits moyens (5) d'acquisition dudit code d'identification (C) sont extérieurs dudit microtome (1) et/ou placés sur ledit microtome (1).

10. Procédé de sectionnement de spécimens de matériau biologique inclus dans un bloc (10) contenu dans une cassette (4) au moyen d'un microtome (1) selon l'une quelconque des revendications 1 à 9, la cassette comprenant au moins un code d'identification (C), le procédé comprenant une procédure de dégrossissage dans laquelle ledit spécimen de matériau biologique inclus dans ledit bloc est préparé pour être sectionné, ou une première procédure de sectionnement dudit spécimen de matériau biologique, dans lequel ladite procédure de dégrossissage, ou ladite première procédure de sectionnement, comprend les étapes consistant à :
a) fixer une cassette (4) contenant un bloc (10) pour l'inclusion d'un spécimen de matériau biologique à un dispositif porte-cassette (3) ;
b) déterminer au moins une valeur d'au moins un paramètre de coupe (d, α, τ, v, Ω, r, w) adapté au sectionnement du spécimen de matériau biologique ;
c) acquérir un code d'identification (C) associé à ladite cassette (4)
d) associer ladite au moins une valeur d'au moins un paramètre de coupe (d, a, τ, v, Ω, r, w) adapté pour la section dudit spécimen de matériau biologique au code d'identification (C) de ladite cassette (4) ;
le procédé comprenant l'étape supplémentaire consistant à retirer la cassette du dispositif porte-cassette (3) après que les étapes a) à d) ont été effectuées,
le procédé comprenant également au moins une procédure de sectionnement successive, dans laquelle une pluralité de sections du spécimen de matériau biologique sont coupées, qui est effectuée après la procédure de dégrossissage, ou après ladite première procédure de sectionnement, dans laquelle ladite au moins une valeur d'au moins un paramètre de coupe (d, α, τ, v, Ω, r, w) adaptée à la section dudit échantillon de matériau biologique associée audit code d'identification (C) dans ladite procédure de dégrossissage, ou dans ladite première procédure de sectionnement, est utilisée dans ladite procédure successive de sectionnement d'une pluralité de sections du spécimen de matériau biologique, dans lequel ladite procédure successive de sectionnement comprend l'étape de fixation d'une cassette (4) au dispositif porte-cassette (3) ; l'étape consistant à acquérir le code d'identification (C) de ladite cassette (4) et l'étape consistant à régler à nouveau les moyens de réglage (6, 9, 20, 21, 22, 23, 24) d'au moins un paramètre de coupe (d, α, τ, v, Ω, r, w) en fonction de ladite au moins une valeur adaptée au sectionnement associée audit code d'identification (C) pendant la procédure de dégrossissage, ou la première procédure de sectionnement,
dans lequel ladite au moins une valeur d'au moins un paramètre de coupe (d, α, τ, v, Ω, r, w) adaptée au sectionnement correspond à la valeur fixée, ou atteinte, par les moyens de réglage (6, 9, 20, 21, 22, 23, 24) d'au moins un paramètre de coupe (d, α, τ, v, Ω, r, w) à la fin de la procédure de dégrossissage, ou à la fin de ladite première procédure de sectionnement,
dans lequel ladite au moins une valeur d'au moins un paramètre de coupe (d, α, τ, v, Ω, r, w) adaptée à la section comprend la valeur de la distance (d) entre ledit dispositif porte-lame (2) et ledit dispositif porte-cassette (3) utilisé à la fin de la procédure de dégrossissage, ou à la fin de ladite première procédure de section dudit spécimen de matériau biologique.

11. Procédé selon la revendication 10, dans lequel l'étape de détermination d'au moins un paramètre de coupe (d, α, τ, v, Ω, r, w) sur au moins une valeur adaptée au sectionnement comprend l'étape de réglage des moyens de réglage (6, 9, 20, 21, 22, 23, 24) d'au moins un paramètre de coupe (d, α, τ, v, Ω, r, w) sur au moins une valeur adaptée au sectionnement, de préférence, lesdits moyens de réglage (6, 9, 20, 21, 22, 23, 24) sont réglés pour effectuer au moins une coupe de dégrossissage, ou une coupe de sectionnement, du bloc (10), ladite au moins une valeur d'au moins un paramètre de coupe adapté au sectionnement correspondant à la valeur, de préférence réglée par un opérateur, desdits moyens de réglage pour effectuer au moins une coupe de dégrossissage, ou une coupe de sectionnement, du bloc (10).

12. Procédé selon l'une quelconque des revendications 10 à 11 dans lequel l'étape de détermination d'au moins un paramètre de coupe (d, α, τ, v, Ω, r, w) sur au moins une valeur adaptée au sectionnement comprend l'étape d'entrée, ou de sélection parmi une pluralité de valeurs, de préférence par un opérateur, d'au moins une valeur adaptée au sectionnement d'au moins un paramètre de coupe (d, α, τ, v, Ω, r, w), de préférence en fonction du code d'identification (C).
